Europäisches Patentamt

**European Patent Office**

**Office européen des brevets**

(19)

(11) Numéro de publication: **0 013 058**
A1

# (12) DEMANDE DE BREVET EUROPEEN

(21) Numéro de dépôt: **79200807.0**

(22) Date de dépôt: **21.12.79**

(51) Int. Cl.³: **A 01 F 25/20**

(30) Priorité: **27.12.78 BE 57513**

(43) Date de publication de la demande:
**09.07.80 Bulletin 80/14**

(84) Etats Contractants Désignés:
**DE FR GB IT NL**

(71) Demandeur: **Thomas, Joris Jan**
**Brusselsesteenweg 134**
**B-1880 Merchtem(BE)**

(72) Inventeur: **Thomas, Joris Jan**
**Brusselsesteenweg 134**
**B-1880 Merchtem(BE)**

(74) Mandataire: **De Rycker, Rudolf, Ir. et al.**
**Vereenigde Octrooibureaux Belgie S.A. Chariottam 41**
**B-2000 Antwerpen(BE)**

(54) **Appareil de levage et mécanisme de coupe de cet appareil de levage.**

(57) Un disque de coupe (36) et un moteur hydraulique (23) faisant tourner ce disque dans son propre plan, sont portés par un bras (21) qui est relié d'une manière détachable au support (13) de la benne preneuse (8). Ce support (13) relie la benne preneuse (8) au bras de grue. En position de travail du bras de grue, le disque de coupe (36) peut être amené dans une position sensiblement verticale. Le disque de coupe peut être remplacé par deux chaînes sans fin portant des couteaux.

L'appareil est spécialement destiné à être monté sur un tracteur et a être utilisé pour le ramassage du fourrage à partir d'une fosse à fourrage ou d'un silo.

Fig. 3

EP 0 013 058 A1

- 1 -

" Appareil de levage et mécanisme de coupe de
cet appareil de levage ".

L'invention concerne un appareil de levage comprenant un bras de grue, un support d'une benne preneuse suspendu de manière pivotante à ce bras, deux moitiés de benne preneuse montées par rapport à ce support et des moyens mouvant les moitiés de benne preneuse par rapport au support.

De tels appareils de levage avec des moitiés de benne preneuse comprenant chacune une tige et des dents montées sur celle-ci, sont entre autres utilisés pour le ramassage du fourrage, par exemple du foin ou du maïs coupé, à partir d'une fosse à fourrage ou à partir d'un silo formé au champ. L'arrachage du fourrage occasionne de grandes difficultés, en particulier lorsqu'il s'agit de foin. A chaque prise, la benne preneuse arrache également une partie du fourrage qui est abandonnée librement à côté de la place où le fourrage enlevé par la benne preneuse se trouvait. Cet arrachage non seulement rend difficile le transport du fourrage qui est chargé et le transport ultérieur du fourrage qui reste provisoirement dans la fosse ou le silo, mais entraîne également le danger d'une pourriture plus facile du fourrage arraché demeurant dans le silo.

Afin de remédier à cet inconvénient, des dispositifs assez compliqués ont déjà été construits qui libèrent d'abord le fourrage avant que le fourrage soit chargé de la fosse ou du silo à l'aide de la benne preneuse de l'appareil de levage. Ces dispositifs connus et assez compliqués sont chers.

Il a également été proposé de prévoir des couteaux sur les deux parties de benne preneuse à au moins une extrémité de la benne preneuse, ces couteaux coopérant comme des cisailles, au moins un des couteaux des cisailles étant entraîné par un moteur hydraulique. Cette solution a le désavantage que les cisailles se présentent nécessairement au rebord de la benne preneuse et en plus ne peuvent fonctionner qu'ensemble avec la benne preneuse. Il n'est pas possible de détacher le fourrage de tous les côtés désirés en le coupant à l'aide de ces cisailles avant de lever le fourrage découpé à l'aide de la benne preneuse. En plus, les cisailles sont difficilement détachables de la benne preneuse dans cette solution connue, de sorte que la benne preneuse peut moins facilement être utilisée pour d'autres travaux.

L'invention a pour but de remédier à cet inconvénient et de procurer un appareil de levage permettant de détacher en coupant du fourrage indépendamment du fonctionnement de la benne preneuse proprement dite.

Dans ce but, un élément de coupe et des moyens qui entraînent l'élément de coupe dans son propre plan sont reliés au bras de grue d'une manière telle que l'élément de coupe peut être amené dans une position sensiblement verticale en position de travail du bras de grue.

De préférence, l'élément de coupe et les moyens qui entraînent l'élément de coupe dans son propre plan sont reliés au bras de grue par l'intermédiaire du support de la benne preneuse.

Dans une forme de réalisation particulière de l'invention l'appareil de levage comprend un moyen de fixation de la benne preneuse au bras de grue.

Dans une forme de réalisation avantageuse de l'invention, l'élément de coupe et les moyens qui entraînent

0013058

l'élément de coupe dans son propre plan sont portés par un bras relié au support.

Efficacement, le bras est relié au support d'une manière détachable.

Dans une forme de réalisation très particulière de l'invention, le bras est relié au support à l'aide d'une douille montée d'une manière immobile au support et d'une douille montée d'une manière immobile sur le bras, ces douilles s'adaptant l'une sur l'autre, tandis qu'un moyen est prévu pour bloquer les douilles entre elles.

L'invention ne concerne pas uniquement l'appareil de levage décrit ci-dessus, mais également un mécanisme de coupe manifestement destiné à cet appareil de levage.

En particulier, l'invention concerne un mécanisme de coupe composé d'un élément de coupe, de moyens qui entraînent l'élément de coupe dans son propre plan et d'organes portant ces moyens et cet élément de coupe.

D'autres particularités et avantages de l'invention ressortiront de la description de deux formes de réalisation d'un appareil de levage et d'un mécanisme de coupe de cet appareil de levage selon l'invention, donnée ci-après à titre d'exemple non limitatif et avec référence aux dessins ci-annexés.

La figure 1 est une vue latérale très schématique d'un tracteur et d'un appareil de levage selon l'invention monté sur ce tracteur.

La figure 2 reprend à une échelle plus grande une partie de la vue latérale schématique de la figure 1.

La figure 3 est une vue en plan schématique de la partie de l'appareil de levage représentée à la figure 2.

La figure 4 est une vue d'arrière à plus grande échelle selon la ligne IV-IV de la figure 2.

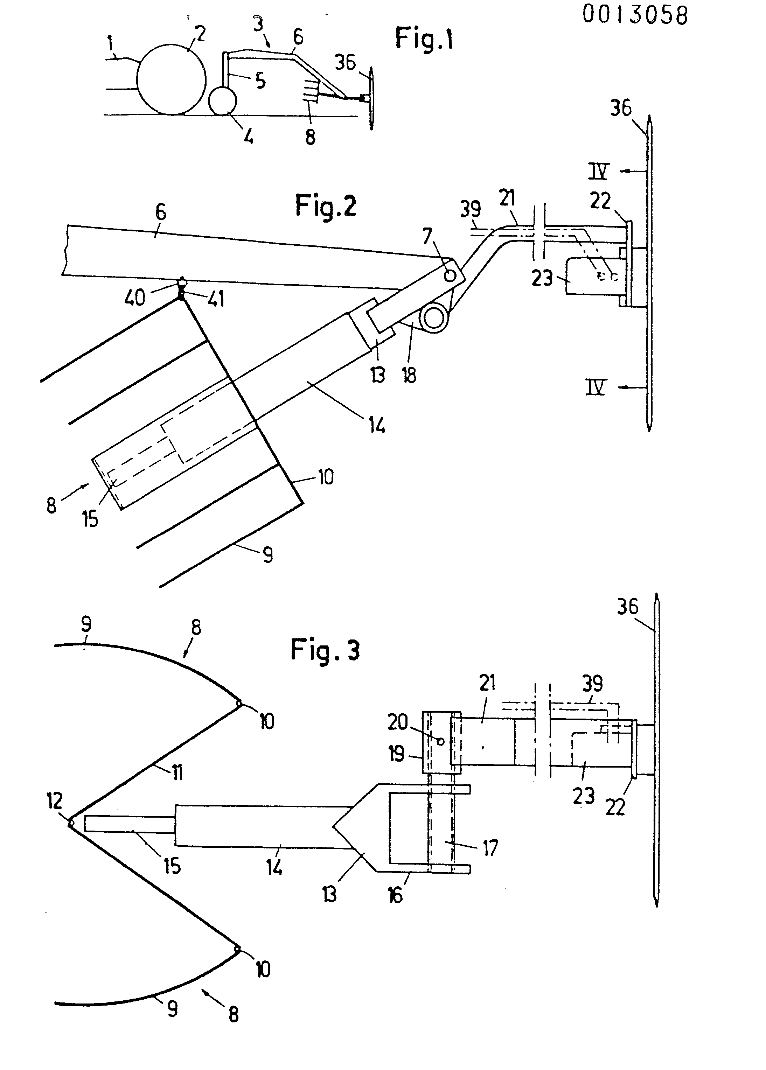

La figure 5 reprend à une échelle plus grande, avec brisure partielle et partiellement en

- 4 -

0013058

coupe, la partie droite de ce qui est représenté à la figure 3.

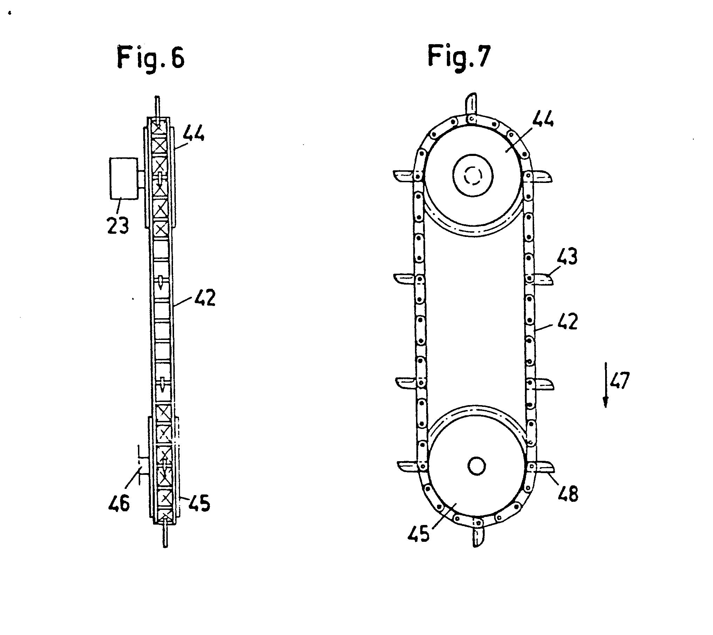

La figure 6 est une vue latérale d'une partie d'une variante du dispositif selon les figures précédentes.

La figure 7 est une vue d'arrière d'une partie de la variante représentée en vue latérale à la figure 6.

Dans les différentes figures, les mêmes chiffres de référence se rapportant à des éléments identiques.

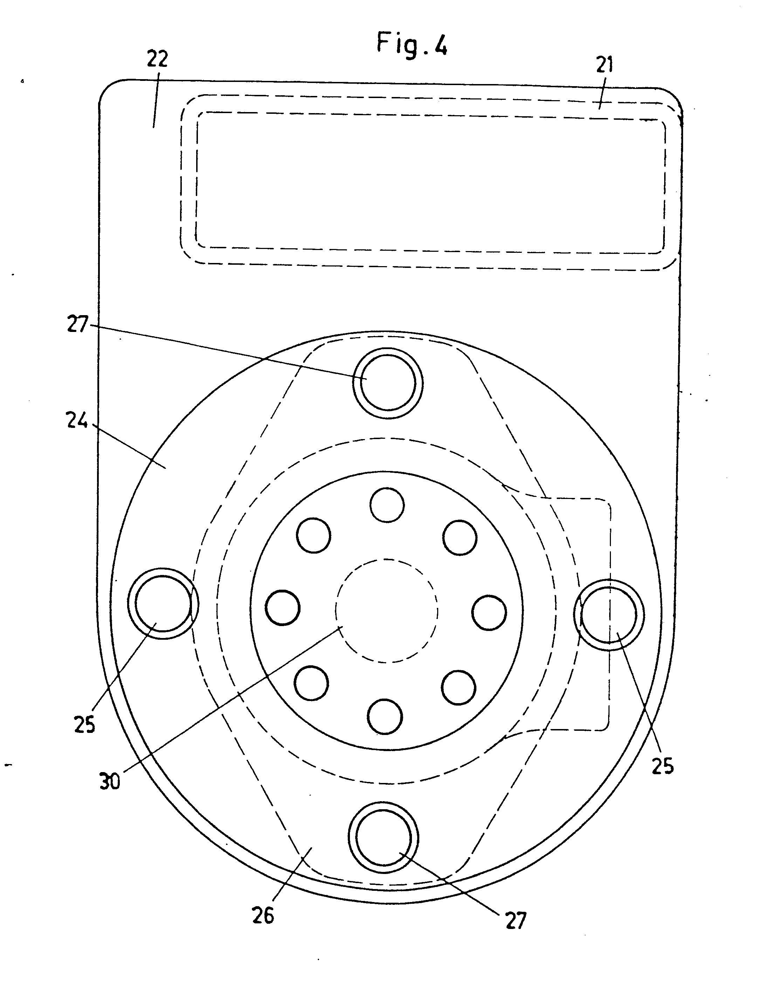

L'appareil de levage selon les figures 1 à 5 est fixé, avec des moyens non représentés aux figures, à un tracteur, dont à la figure 1 une partie a été indiquée par le chiffre de référence 1 et une roue arrière a été indiquée par le chiffre de référence 2.

L'appareil de levage lui-même est composé d'une grue, indiquée en général par le chiffre de référence 3. Cette grue comporte une colonne 5 qui repose sur le sol par l'intermédiaire de roues 4 et qui porte un bras de grue 6. Par l'intermédiaire d'un axe pivot 7, le bras de grue 6 porte une benne preneuse indiquée en général par le chiffre de référence 8. Cette benne preneuse comprend deux moitiés de benne preneuse . Chaque moitié possède une tige 10 portant des dents 9. Chaque tige 10 pivote autour d'une goupille commune 12 par l'intermédiaire d'une paire de lattes 11 qui sont montées d'une manière immobile sur cette tige. Par des bras porteurs non représentés aux figures 1 à 5, les paires de lattes 11 sont reliées à charnière à un support central 13 de la benne preneuse. Les bras porteurs non représentés sont reliés à une extrémité,de manière pivotante,à une paire de lattes 11 et sont reliés à l'autre extrémité,de manière pivotante, au support central 13. Une telle construction, qui n'est pas typique du tout pour l'appareil de levage selon l'invention, est entre autres connue du brevet belge

0013058

n° 863.397.

Le support central 13 porte un cylindre hydraulique 14 qui coopère avec un piston, dont la tige de piston 15 est reliée à la goupille-pivot 12. A l'aide du cylindre hydraulique 14, du piston coopérant avec celui-ci et de la tige de piston 15 y reliée, les deux moitiés de benne preneuse sont mises en mouvement de telle manière que leur dents 9 se rapprochent ou s'éloignent. Dans tout cela, et en particulier dans la commande des moitiés de benne preneuse et dans la commande du bras de grue, l'appareil de levage selon les figures 1 à 5 ne diffère pas des appareils de levage connus.

Le support 13 possède deux bras 16 qui portent deux brides 18. Une douille 17 est montée d'une manière fixe dans ces brides et fait saillie d'un côté en dehors de ces brides, comme il ressort surtout de la figure 3. Une douille extérieure 19, formant un tout avec un bras porteur 21, peut être glissée sur la partie saillante de la douille 17 et être bloquée sur cette partie à l'aide d'un boulon de fixation 20.

Le bras porteur 21 possède à son extrémité la plus éloignée de la douille extérieure 19 une bride porteuse 22 qui forme un tout avec le bras.

Du côté du bras 21, un moteur hydraulique 23 est fixé à la bride 22. De l'autre côté, un bloc 24 est fixé à la même bride 22. Le bloc 24 est fixé à la bride par deux boulons 25 et par deux boulons 27. Les têtes des boulons 25 et 27 sont noyées dans le bloc 24. Les boulons 25 sont vissés dans la bride 22. Les boulons 27 passent à travers la bride 22 et aussi à travers la bride 26 du logement du moteur 23. Du côté de la bride 26 du logement du moteur, qui est le plus éloigné du bloc 24, des écrous 28 sont vissés sur les boulons 27. Aussi bien le logement du moteur 23 que le bloc 24 forment donc un ensemble solidaire

0013058

de la bride 22 et par conséquent du bras 21.

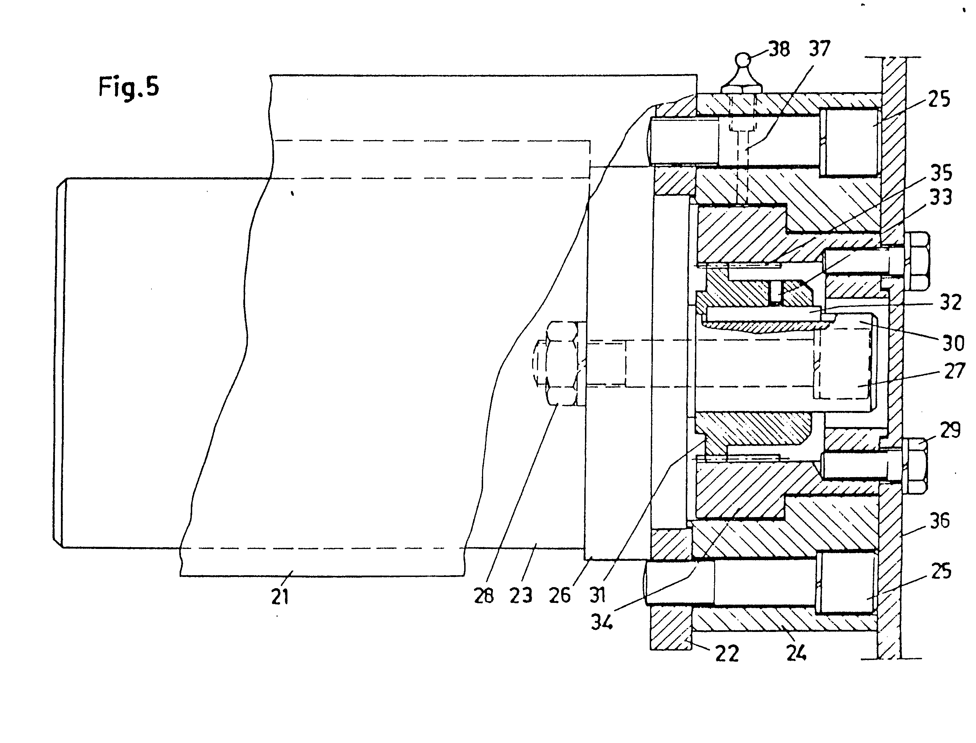

Comme il ressort de la figure 5, un espace cylindrique ayant un diamètre plus grand du côté de la bride 22 et un diamètre plus petit de l'autre côté est ménagé dans le bloc 24. Dans cet espace s'adapte un rotor 34 à denture intérieure 35. Dans la denture 35 s'engrène une roue dentée 31 qui est montée d'une manière immobile sur l'arbre 30 du moteur hydraulique 23. Une clavette 32 et un petit boulon de serrage 33 fixent la roue dentée 31 sur l'arbre 30. Le mouvement rotatif de l'arbre de moteur 30 est donc transmis par la roue dentée 31 et la denture intérieure 35 au rotor 34 et par conséquent également au disque de coupe 36 qui est fixé, à l'aide de petits boulons 39, au rotor 34. Un canal de graissage 37 est ménagé dans ce bloc 24 pour assurer le graissage des surfaces de contact du rotor 34 et du bloc 24. Sur l'entrée de ce canal est vissée une tête 38.

Au moteur hydraulique 23 mènent des conduites 39. Dans ces conduites sont montées de petites vannes, non représentées, dont l'ouverture et la fermeture commandent ou arrêtent le fonctionnement du moteur hydraulique. Ces petites vannes sont pourvues de moyens permettant l'ouverture et la fermeture à distance, par exemple à partir du siège du conducteur du tracteur.

Le bras de grue 6 porte un oeil 40, et une tige 10 d'une moitié de benne preneuse porte un crochet 41. A l'aide de cet oeil 40 et de ce crochet 41, la benne preneuse peut être suspendue au bras de grue 6.

Quand la benne preneuse est ainsi suspendue au bras de grue 6 qui se trouve dans une position de travail normale, le support 13 et les bras 16 faisant partie de ce support, prennent une position telle que le bras porteur 21 est sensiblement horizontal et que le disque de coupe 36 s'étend par conséquent dans une position sensiblement verticale.

- 7 -

0013058

Le moteur hydraulique 23 est mis en marche, de sorte que le disque de coupe 36 est en mouvement dans son propre plan. Par le bras de grue 6, on fait entrer le disque 36 dans le fourrage jusqu'à une profondeur qui correspond à-peu-près au rayon du disque de coupe 36, c'est-à-dire jusqu'à une profondeur de l'ordre de 35 à 40 cm . On impose ensuite un mouvement de va-et-vient de l'arbre de grue 6 autour de la colonne 5, tandis que le disque reste à la même profondeur. On détache ainsi en coupant, de la fosse ou du silo, le fourrage, qu'on soulève après en dehors du silo ou de la fosse avec la benne preneuse à la manière usuelle. Pour cela, la benne preneuse doit évidemment reprendre sa position normale suspendue au bras 6. La benne preneuse prend automatiquement cette position quand on sort le crochet 41 de l'oeil 40. Le support 13 et par conséquent la benne preneuse toute entière tournent alors autour de la goupille-pivot 7 jusqu'à ce que la benne preneuse ait trouvé sa position d'équilibre sous cette goupille. Avant cela, on a arrêté le moteur hydraulique 23 en fermant les vannes qui permettent la circulation à travers les conduites 39. Le bras porteur 21 pivote évidemment avec le support 13 autour de la goupille 7, de sorte que le disque de coupe 36 qui ne tourne pas se trouve au-dessus de la goupille 7 lorsque la benne preneuse 8 est utilisée pour déplacer du fourrage.

De la description donnée ci-devant, il ressort que le disque 36 et le moteur hydraulique 23 sont reliés au bras de grue 6 par l'intermédiaire du support de la benne preneuse.

Le bras 21 qui porte le moteur 23 et le disque 36 est relié au support 13 d'une manière détachable par l'intermédiaire des douilles 17 et 19. Le boulon 20 bloque les douilles 17 et 19 l'une par rapport à l'autre.

L'axe des douilles 17 et 19 est parallèle à l'axe de pivotement 7 du support 13 par rapport au bras de grue 6. L'arbre 30 du moteur hydraulique 23 est perpendiculaire à l'axe de pivotement 7 du support 13 par rapport au bras de grue 6.

Il est à remarquer que l'arbre du moteur hydraulique ne porte pas directement le disque 36 et que ce disque est monté d'une manière immobile sur un rotor 34 qui est monté dans un bloc 24 qui est fixe par rapport au bras porteur 21 et à la partie non rotative du moteur hydraulique 23.

Dans la forme de réalisation dont une partie est représentée aux figures 6 et 7, le disque de coupe 36 est remplacé par une chaîne 42, dont certains maillons portent de petits couteaux tranchants 43. Ces petits couteaux 43 se trouvent et se déplacent dans le plan de la chaîne 42, c'est-à-dire dans un plan qui est perpendiculaire à l'arbre 30 du moteur hydraulique 23.

La chaîne 22 est entraînée par une roue à chaîne 44 et est guidée par la roue à chaîne 45. La roue à chaîne 44 peut être fixée directement sur l'arbre 30 du moteur hydraulique 23; cette roue à chaîne 44 peut également être montée sur le rotor 34, comme c'est représenté pour le disque de coupe 36 à la figure 5.

La roue à chaîne 45 qui n'est pas entraînée est montée folle autour d'un axe 46 qui est relié, à l'aide d'une pièce de support non représentée aux figures, à la bride 22 et au bras 21. En position de travail, la roue à chaîne 45 se trouve au-dessus de la roue à chaîne 44. La chaîne 42 avec les couteaux 43 s'étend donc vers le bas. Ainsi on peut couper profondément dans le fourrage. Dans un seul mouvement de coupe, il est possible de découper du fourrage à pleine profondeur, ce qui doit être enlevé plus tard par la benne preneuse.

La chaîne 42 a un déplacement dans son propre plan dans le sens indiqué par la flèche 47. Le tranchant 48

0013058

des petits couteaux 43 se trouve évidemt à la face avant du petit couteau, vu dans le sens de déplacement de la chaîne indiqué par la flèche 47.

L'invention n'est nullement limitée aux formes d'exécution décrites ci-avant et bien des modifications peuvent y être apportées, notamment quant à la forme, au nombre, à la composition et à la disposition des éléments intervenant dans sa réalisation sans sortir du cadre de la présente demande de brevet.

Le bras porteur du moteur hydraulique et du disque de coupe peut par exemple s'étendre sous un autre angle que celui qui est représenté par rapport à la ligne axiale déterminée par le cylindre hydraulique 14 et la tige de piston 15. Cet angle peut par exemple être de l'ordre de 90°.

Le disque de coupe ne doit pas être nécessairement coaxial par rapport au moteur hydraulique, mais il peut se trouver, dans la position de travail du disque de coupe, considérablement sous ce moteur. Le disque de coupe peut alors être entraîné par le moteur par l'intermédiaire d'une chaîne et de roues à chaîne. Plus profond est situé le disque de coupe sous le moteur hydraulique, plus profond on peut couper dans le fourrage. La suspension par un crochet et un oeil peut être remplacée par un accouplement rapide mécanique qui est par exemple commandé à partir du tracteur à l'aide d'une corde.

Si en plus les conduites vers le moteur hydraulique sont reliées aux conduites vers le cylindre hydraulique qui ouvre et ferme la benne preneuse par l'intermédiaire de vannes à trois voies, le conducteur ne doit même plus descendre pour passer du fonctionnement normal de la benne preneuse au fonctionnement du mécanisme de coupe et vice versa.

Le disque de coupe et les moyens d'entraînement de celui-ci peuvent également être montés sur une partie
de la benne preneuse, l'axe du disque s'étend alors
parallèlement à la goupille-pivot.

- 11 -

REVENDICATIONS

1. Appareil de levage, comprenant un bras de grue (6), un support (13) d'une benne preneuse suspendu de manière pivotante à ce bras, deux moitiés de benne preneuse (9-10-11) montées par rapport à ce support et des moyens (14-15) mouvant les moitiés de benne preneuse par rapport au support, caractérisé en ce qu'un élément de coupe (36-42-43) et des moyens (23) qui entraînent l'élément de coupe (36-42-43) dans son propre plan sont reliés au bras de grue (6) d'une manière telle que l'élément de coupe (36-42-43) peut être amené dans une position sensiblement verticale en position de travail du bras de grue (6).

2. Appareil de levage selon la revendication précédente, caractérisé en ce que l'élément de coupe (36-42-43) et les moyens (23) qui entraînent l'élément de coupe (36-42-43) dans son propre plan sont reliés au bras de grue (6) par l'intermédiaire du support (13) de la benne preneuse.

3. Appareil de levage selon la revendication précédente, caractérisé en ce qu'il comprend un moyen de fixation (40-41) de la benne preneuse (9-10-11) au bras de grue (6).

4. Appareil de levage selon l'une ou l'autre des revendications 2 et 3, caractérisé en ce que l'élément de coupe (36-42-43) et les moyens (23) qui entraînent l'élément de coupe dans son propre plan sont portés par un bras (21) relié au support (13).

5. Appareil de levage selon la revendication précédente, caractérisé en ce que le bras (21) est relié au support (13) d'une manière détachable.

6. Appareil de levage selon la revendication précédente, caractérisé en ce que le bras (21) est relié au support (13) à l'aide d'une douille (17) montée d'une manière immobile sur le

0013058

support (13) et d'une douille (19) montée d'une manière immobile sur le bras (21), ces douilles (17-19) s'adaptant l'une sur l'autre, tandis qu'un moyen (20) est prévu pour bloquer les douilles (17-19) entre elles.

7. Appareil de levage selon la revendication précédente, caractérisé en ce que l'axe des douilles (17-19) est parallèle à l'axe de pivotement (7) du support (13) par rapport au bras de grue (6).

8. Appareil de levage selon l'une ou l'autre des revendications précédentes, caractérisé en ce que les moyens (23) qui entraînent l'élément de coupe (36-42-43) dans son propre plan consistent en un moteur hydraulique.

9. Appareil de levage selon la revendication précédente, caractérisé en ce que l'arbre (30) du moteur hydraulique (23) est perpendiculaire à l'axe de pivotement (7) du support (13) par rapport au bras de grue (6).

10. Appareil de levage selon l'une ou l'autre des revendications 8 et 9, caractérisé en ce que l'élément de coupe (36) ou un organe (44) entraînant cet élément de coupe (42-43) est monté d'une manière immobile sur un rotor (34) à denture intérieure (35), qui est monté dans un bloc (24) immobile par rapport à la partie non rotative du moteur (23), l'arbre (30) de ce moteur (23) portant une roue dentée (31) s'engrènant dans la denture intérieure (35).

11. Appareil de levage selon l'une ou l'autre des revendications précédentes, caractérisé en ce que l'élément de coupe est un disque de coupe (36) et que les moyens (23) susdits font tourner le disque (36) dans son propre plan.

12. Appareil de levage selon l'une ou l'autre des revendications 1 à 10, caractérisé en ce que l'élément de coupe est une chaîne sans fin (42) sur laquelle sont fixés des couteaux (43).

0013058

13. Appareil de levage selon les revendications 4 et 12, caractérisé en ce que, en position de travail, la chaîne (42) s'étend vers le bas à partir du bras (21).

14. Appareil de levage comme décrit ci-avant ou comme représenté aux dessins ci-annexés.

15. Mécanisme de coupe manifestement destiné à un appareil de levage selon l'une ou l'autre des revendications précédentes.

16. Mécanisme de coupe, caractérisé en ce qu'il est composé d'un élément de coupe (36-42-43), de moyens (23) qui entraînent l'élément de coupe dans son propre plan, et d'organes (21-19) portant ces moyens (23) et cet élement de coupe (36-42-43).

17. Mécanisme de coupe comme décrit ci-avant ou comme représenté aux dessins ci-annexés.

0013058

Fig.1

Fig.2

Fig. 3

0013058

# Fig.4

Fig.5

3/4

0013058

## Fig.6

## Fig.7

**RAPPORT DE RECHERCHE EUROPEENNE**

Office européen
des brevets

0013058
Numéro de la demande

EP 79 20 0807

| Catégorie | Citation du document avec indication, en cas de besoin, des parties pertinentes | Revendication concernée |
|---|---|---|
| | DE - A - 1 948 187 (TEXAS INDUSTRIES INC.) <br> * page 8, lignes 12 à 21; fig. 1 à 4 * <br> -- | 1, 11-13 |
| | DE - U1 - 7 812 413 (G. DÜCKER KG) <br> * renvendication 6 * <br> -- | 8 |
| P | DE - A1 - 2 809 225 (W. FÖCKERSPERGER) <br> * totalité du brevet * <br> -- | 1 |
| D,A | BE - A - 863 397 (J.J. THOMAS) <br> * totalité du brevet * <br> ---- | 1 |

**DOCUMENTS CONSIDERES COMME PERTINENTS**

**CLASSEMENT DE LA DEMANDE (Int. Cl.3)**

A 01 F 25/20

**DOMAINES TECHNIQUES RECHERCHES (Int. Cl.3)**

A 01 F 25/20
B 66 C 1/58

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

X Le présent rapport de recherche a été établi pour toutes les revendications

| Lieu de la recherche <br> Berlin | Date d'achèvement de la recherche <br> 31-03-1980 | Examinateur <br> SCHOFER |
|---|---|---|

OEB Form 1503.1  06.78